# EUROPÄISCHE PATENTSCHRIFT

(11) **EP 1 479 288 B1**
(45) Veröffentlichungstag und Bekanntmachung des Hinweises auf die Patenterteilung: **09.08.2006**
(21) Anmeldenummer: 04005893.5
(22) Anmeldetag: 12.03.2004
(51) Int. Cl.: A01G 13/02

(54) **Verfahren zum Ausbringen von Mulchmaterial, Oberbodenmaterial und dergl. auf grüne Randbereiche von Strassen und Autobahnen und selbstfahrende Maschine zum Durchführen dieses Verfahrens**
Method for the application of mulch, soil covering material or similar over the peripheral area of roads or highways and self-propelled machine to carry out said method
Méthode pour l'application de paillis, matériel de revêtement de sol ou similaire sur des surfaces périphériques d'une route ou autoroute et machine automotrice pour la mise en oeuvre de cette méthode

(30) Priorität: 21.05.2003 DE 10322903
(43) Veröffentlichungstag der Anmeldung: 24.11.2004
(73) Patentinhaber: Schmidmeier, Thomas, D-93197 Zeitlarn/Ödenthal (DE)
(72) Erfinder: Schmidmeier, Thomas, D-93197 Zeitlarn/Ödenthal (DE)
(74) Vertreter: Wasmeier, Alfons

(56) Entgegenhaltungen:
- EP-A- 1 066 751
- US-A- 5 181 804
- US-A- 6 097 425

## Beschreibung

Die Erfindung betrifft ein Verfahren und eine selbstfahrende Maschine zum Ausbringen von Mulchmaterial, Oberbodenmaterial oder dergl. Andeckmaterial auf begrünte bzw. zu begründende Randbereiche von Straßen und Autobahnen gemäß den Ansprüchen 1 und 4.

Mulchmaterialien in Form von zerkleinertem Stroh, Rinde und Holzabfällen werden an Randbereichen von Straßen und Autobahnen sowie generell im Landschaftsbau in zunehmendem Maße ausgebracht, in der Regel nach dem Anlegen von Bepflanzungen. Dieses Ausbringen von Mulchmaterial ist bis vor kurzem weitgehend von Hand erfolgt. Da der Bedarf an derartigen Mulchungen jedoch ständig zugenommen hat, wurden derartige Mulchapplikationen maschinell und flächig anstelle von Einzelmulchungen vorgenommen. Dabei wurden bzw. werden vorhandene Maschinen an zentralen Mulchmaterial-Lagerstellen in Form von kippbaren Lastwägen beladen, an die entsprechenden, zu mulchenden Randbereiche von Straßen und Autobahnen herangefahren, und vom Standstreifen aus das Mulchmaterial mit Hilfe von Wurfbändern ausgebracht. In der EP-A-1 066 751 wird eine solche Maschine veröffentlicht.

Diese Methode hat den entscheidenden Nachteil, dass die Ladekapazität derartiger Lastwägen relativ gering ist, so dass pro Ladung nur eine relativ kleine Fläche mit Mulchmaterial bedeckt werden kann und der entleerte Lastwagen häufig wieder an die Ladestelle zurückgefahren werden muss, um einen neuen Arbeitszyklus durchzuführen. Dies aber bedeutet, dass entweder die Wurfmaschine nicht regelmäßig mit Mulchmaterial gespeist werden konnte oder aber eine größere Zahl von Lastwägen eingesetzt werden musste, um im intermittierenden Betrieb die Wurfmaschine so kontinuierlich wie möglich mit Mulchmaterial zu versorgen. Dies bringt aber auch mit sich, dass der Verkehr zwischen der Abwurfstelle und der Lagerstelle erheblich belastet wird, und dass die Übergabe einer LKW-Ladung an die Auswurfmaschine, die etwa 1,5 Std. beansprucht, den LKW eine erhebliche Zeitspanne bindet.

Aufgabe der Erfindung ist, ein Verfahren und eine Einrichtung anzugeben, um den Betrieb,d. h. die Leerzeiten rationeller auszugestalten und eine effizientere Methode für das Ausbringen von entsprechenden Mulch- und Oberbodenmaterialien zu erreichen.

Gemäß der Erfindung wird hierzu vorgeschlagen, dass das auszubringende Mulch- bzw. Oberbodenmaterial mit einem Großraum-Lastwagen an die Ausbringmaschine herangeführt, die Materialübergabe von dem LKW auf die Ausbringmaschine im kontinuierlichen Betrieb zwischen LKW und Ausbringmaschine übergeben wird, und die Ausbringmaschine während der ununterbrochenen Übergabe kontinuierlich beschickt sowie das auszubringende Material seitlich auf die Randbereiche, Böschungen und dergleichen über geschwindigkeitsvariable Vorrichtungen fortlaufend abgegeben wird.

Ein derartiges Verfahren wird insbesondere mit einer Einrichtung durchgeführt, bei der die das Mulchmaterial ausbringende Maschine am Materialaufnahmeende eine elastisch nachgiebige Kopplungsvorrichtung zum Ankoppeln bzw. losen Verbinden der Maschine mit dem das Material übergebenden LKW aufweist, die Aufnahmevorrichtung der Maschine bei ununterbrochenem Betrieb bzw. unter Beibehaltung des Betriebes der Maschine das Material von der Ladebrücke des LKW aufnimmt, LKW und Verteilmaschine mit gleicher Arbeitsgeschwindigkeit bewegt werden, ein Querförderer in der Verteilmaschine vorgesehen ist, der das Material von der Aufnahmevorrichtung auf einen Materialstrang in Achsrichtung der Maschine zusammenführt, und ein Auslegerarm der Verteilmaschine eine Fördervorrichtung aufweist, die dieses Strangmaterial auf eine Beschleunigungsvorrichtung am Ende des Auslegerarmes überträgt und das Gut mit verstellbarer Geschwindigkeit und damit veränderlicher Wurfweite abgibt.

Die Materialaufnahmevorrichtung ist nach einer Ausführungsform der Erfindung so ausgebildet, dass sie eine Puffer- bzw. Kopplungsvorrichtung mit Rollen aufweist, die mit der Rückseite des Rahmens oder der Ladebrücke des LKW in Eingriff kommen und LKW sowie Verteilmaschine miteinander koppeln; die Puffer- bzw. Kopplungsvorrichtung ist dabei auf einem Rahmengestell angeordnet, das z. B: mittels Tragarm mit dem Maschinenrahmen federnd nachgiebig und teleskopartig ausfahrbar ausgebildet ist. Nach einer speziellen Ausführungsform ist die Materialaufnahmevorrichtung ein Kratzboden, der das aufgenommene Material einem in der Verteilmaschine angeordneten Querförderer, z. B. einem beidseitigen, zur Mitte fördernden Schneckenförderer zuführt, der das Material auf ein in Längsachse der Verteilmaschine angeordnetes Förderband richtet, von wo der Materialstrang auf den Ausbringerarm übergeben wird. Der Ausbringerarm weist am abgabeseitigen Ende ein Beschleunigerband auf, das das Material mit einstellbarer Geschwindigkeit abwirft. Damit kann die Wurfweite geregelt werden.

Die Verteilmaschine weist am rückseitigen Ende ein Gegengewicht auf, das schwenkbar zur Längsachse der Maschine ausgebildet ist und das selbsttätig das auf die Verteilmaschine wirkende Kippmoment aufgrund der Verschwenkung des Ausbringarmes kompensiert. Auf diese Weise wird die Gefahr des Kippens der Maschine bei extremer Auskragung des Ausbringarmes, wie auch eine ungünstige Lastverteilung an der Verteilmaschine unterbunden. Des Weiteren ist an der Rückseite der Verteilmaschine eine nachlaufende Reinigungsanordnung z. B. eine rotierende Bürstenanordnung vorgesehen, die das verloren gegangene Material von der Fahrbahn weg kehrt, sodass die Straße bzw. Autobahn laufend von herabgefallenem Mulchmaterial gereinigt wird. Der Betrieb der Verteilmaschine läuft in der Weise ab, dass die Verteilmaschine den das Mulchmaterial anliefernden LKW vor sich her schiebt, während das Mulchmaterial von dem LKW-Kipper auf den Kratzboden überlädt. Die Verbindung zwischen LKW und Verteilmaschine erfolgt z. B. über eine an der Verteilmaschine angebrachte Rollenanordnung, die an die rückwärtigen Räder des LKW gedrückt werden, sodass ein loser Kontakt zwischen beiden Fahrzeugen besteht und der LKW-Fahrer lediglich darauf achten muss, dass der Kontakt zwischen beiden Fahrzeugen aufrechterhalten bleibt. Alternativ kann eine Schnellkuplung zwischen beiden Fahrzeugen vorgesehen sein, die nach Entleeren des LKWs von der Maschine aus freigegeben wird. Das Material wird von dem LKW auf einen Kratzboden der Verteilmaschine übergeben, der als Bunker ausgeführt sein kann, und der das Material auf Verteilbänder übergibt. Von den Reinigungsbändern wird das Mulchmaterial auf einen sogenannten Reinigungslader übergeben, der ein großes, fahrbares Förderband ist, das hydraulisch nach allen Seiten beweglich und schwenkbar ist, und das mit Hilfe von Übergabebändern ein exaktes Ausbringen des Mulchmaterials direkt von oben auf die bepflanzte Fläche ermöglicht. Hierzu ist ein in der Geschwindigkeit verstellbares Abförderband als Verteilgerät vorgesehen, wobei am Abgabeende Streuteller eingesetzt werden können, die schwenkbar und mit veränderlicher Geschwindigkeit betreibbar sind.

Mit dem erfindungsgemäßen Verfahren bzw. der erfindungsgemäßen Einrichtung wird das Ausbringen des Mulch- oder dergl. Materials entscheidend vereinfacht, da das auszubringende Material mit großen LKWs unmittelbar an die Verteilmaschine herangeführt wird, ohne dass ein Abkippen des Materials und ein erneutes Aufladen erforderlich ist, damit die Be- und Entladevorgänge und die Kosten für Ladegeräte entfallen, erheblich an Kosten für Betriebsstoffe und Personal gespart und die Verteilmaschine mit geringer Motorleistung betrieben werden kann, mit der Verteilmaschine schwer zu erreichende und von der Trasse entfernt liegende Flächen erreicht werden können, sodass ein Nachbessern des Mulchens von Hand in schwierigen Bereichen entfällt, eine exakte Verteilung möglich ist, die ein Nacharbeiten weitgehend erübrigt, die für Verkehrssicherung anfallenden Kosten entscheidend reduziert werden, weil das Ausbringen des Mulchmaterials mit erheblich höherer Leistung erfolgen kann, und eine entscheidend verbesserte Tagesleistung (etwa die 10fache Leistung gegenüber bisherigen Verfahren) erzielt wird.

Nachstehend wird die Erfindung in Verbindung mit der Zeichnung anhand eines Ausführungsbeispieles erläutert. Es zeigt:
- Fig. 1: eine schematische Darstellung einer Aufsicht auf eine erfindungsgemäße Verteilmaschine mit angedeuteter Ankopplung an einen Großraum-LKW,
- Fig. 2: eine schematische Darstellung einer Seitenansicht der Verteilmaschine nach Figur 1,
- Fig. 3: eine schematische Prinzipdarstellung der Betriebsweise nach der bisher angewandten Methode, und
- Fig. 4: eine schematische Prinzipdarstellung der Betriebsweise mit einer erfindungsgemäßen Verteilmaschine.

Die das Mulch-, Oberboden- oder dergl. Material ausbringende Verteilmaschine ist mit 1 bezeichnet. Es handelt sich hierbei um eine selbstfahrende Maschine hoher Leistung, die am aufnahmeseitigen Ende einen Bunker mit Kratzboden 2, einen doppelseitigen Querförderer 3, einen Grundrahmen 4 mit Radachsen 5 und 6, und einen schwenkbaren Auslegerarm 7 aufnimmt. Am vorderen Ende des Maschinenrahmens 4 sind Träger 8 befestigt, die mit Tragarmen 9 verlängert sind und über das vordere Ende des Fahrzeuges 1 vorstehen. Die Träger 8 und Tragarme 9 können teleskopisch ausgebildet sein und die Tragarme 9 sind angetrieben ausfahrbar. Die freien Vorderenden der Tragarme 9 nehmen ein Gestell 10 auf, an dem Rollen 11, 12 befestigt sind. Die Rollen 11 und 12 werden im Betrieb in Kontakt mit einem Großraum-Lastwagen L gebracht, z. B., indem die Rollen 11 und 12 in Eingriff mit den Reifen des LKW L gehalten werden. Wahlweise kann jedoch auch eine Verbindung zwischen LKW L und Verteilmaschine 1 über Schnellkuplungen erfolgen.

Der Bunker 2 nimmt das auszubringende Material von dem LKW L auf und befördert das Material mit Hilfe des Kratzbodens 13 in die Maschine, bei der im Anschluss an den Bunker 2 ein Querförderer 3 angeordnet ist, der z. B. aus zwei gegenläufigen, jeweils zur Mittenachse der Verteilmaschine fördernden Schnecken, wie durch Pfeile P angedeutet, besteht. An den Querförderer 3 schließt ein in Längsachse der Verteilmaschine umlaufendes Förderband 16 an, das den von den beiden gegenläufigen Schnecken 14, 15 gebildeten Strang 17 aus Mulchmaterial an eine Übergabestelle 18 transportiert, an der der Förder- und Abgabearm 7 über einen Auslegerabschnitt 19 das Mulchmaterial in einem Strang 20 an einen weiteren Förderer 21 am Abgabeende des Ausbringarmes 7 abgibt, der als Beschleunigerband 21 z. B. mit einem Schleuderteller 22 ausgebildet ist. Dieses Beschleunigerband ermöglicht den Abwurf des auszubringenden Mulchmaterials mit erhöhter Geschwindigkeit, um einerseits die Wurfweite verändern zu können und andererseits eine gesteuerte Dosierung der Abgabe zu erreichen. Am rückseitigen Ende der Verteilmaschine 1 ist ein nach außen vorstehender Träger 23 schwenkbar befestigt, an dessen freiem Ende ein Gegengewicht 24 angebracht ist. Durch die Schwenkbarkeit dieses Gegengewichtes 23 wird ein Gewichtsausgleich für den Schwenk-Ausbringarm 7 geschaffen, um ein Kippen bzw. ungleichförmiges Belasten der Verteilmaschine 1 zu vermeiden. Des weiteren ist am rückseitigen Ende der Verteilmaschine 1 auf einem Träger 25 eine Bürstenanordnung 26 vorgesehen, die auf die Straße gefallenes Mulchmaterial zum Straßenrand befördert. Eine derartige Bürstenanordnung besteht vorzugsweise aus gegenläufigen Rundbürsten 27, 28, die rotierend ausgebildet sind.

Der Großraum-LKW hat beispielsweise ein Fassungsvermögen von 80 m³, der Bunker der Verteilmaschine 1 hat ein Fassungsvermögen von z. B. 8 m³, so dass der Bunker eine ausreichende Kapazität hat, um LKW-Wechselzeiten zu überbrücken oder unvorhergesehene Wartezeiten auszugleichen.

Der gesamte Betriebsablauf geht dabei wie folgt vor sich:

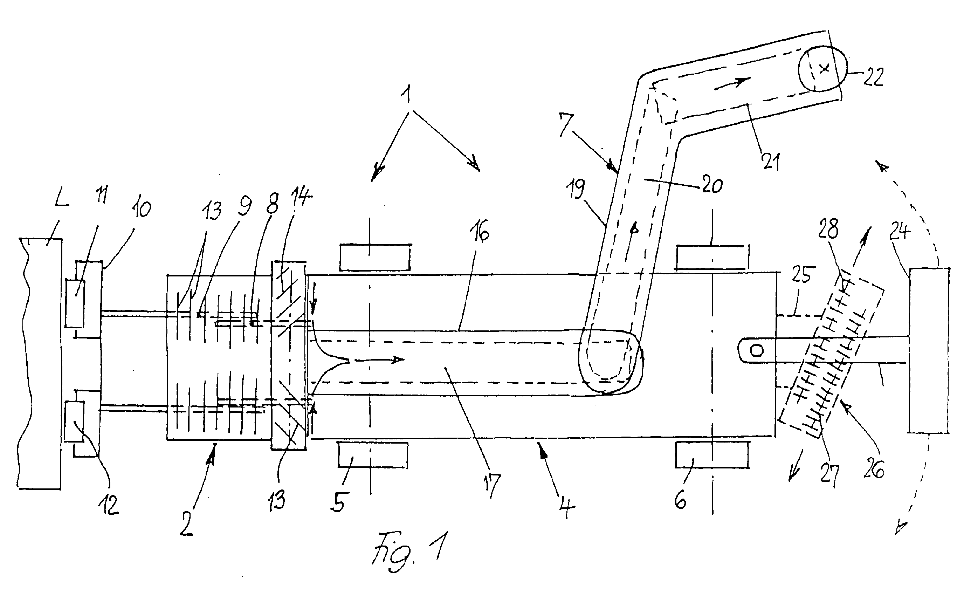

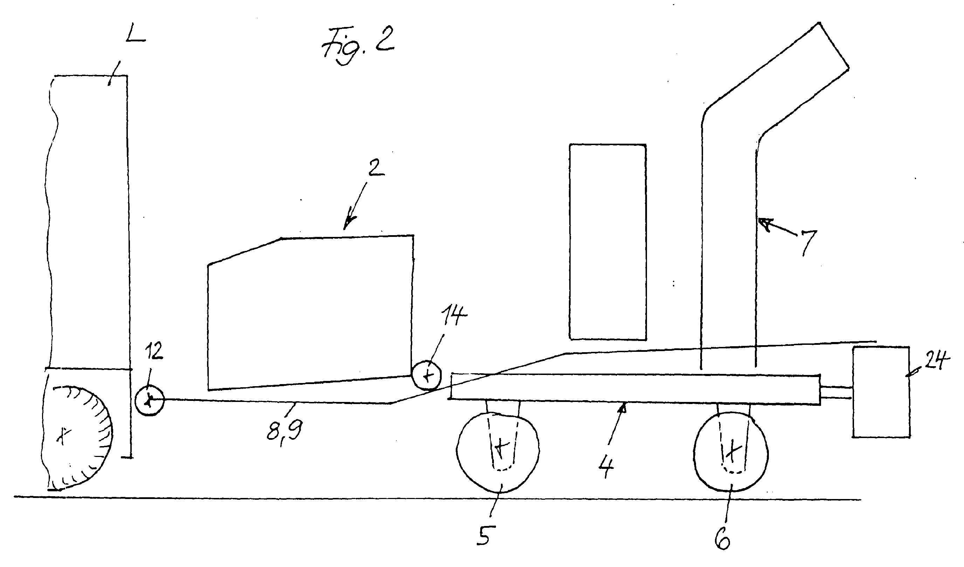

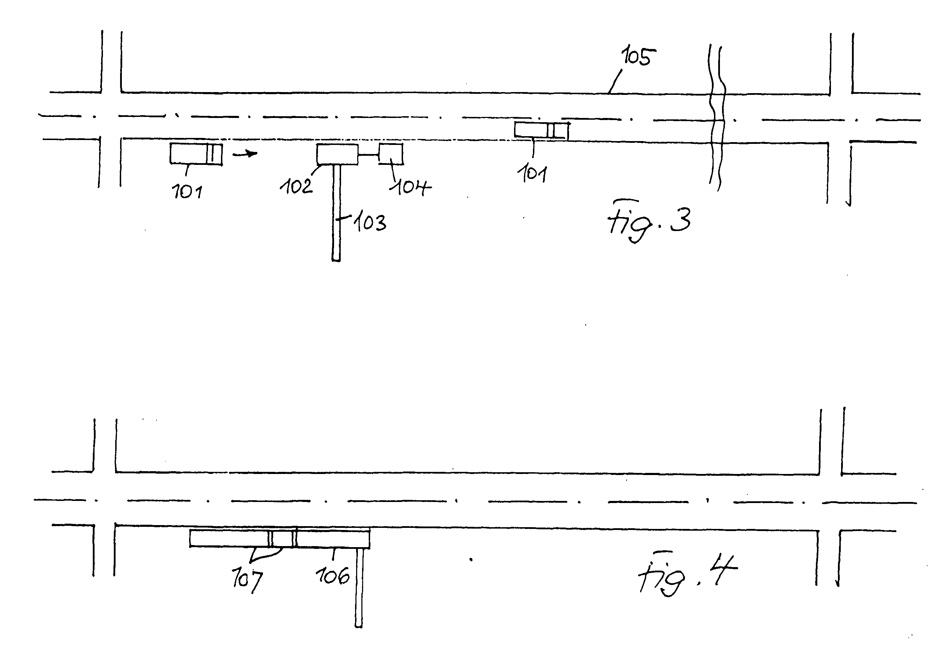

Figur 3 zeigt schematisch die derzeit angewendete Methode anhand eines zu mulchenden oder zu bedeckenden Autobahn-Seitenstreifens, bei dem an einer straßennahen Stelle 100 ein Vorrat an Rindermulch gelagert wird, der auf Lastwägen 101 aufgeladen wird. Die betreffenden Lastwägen fahren in zeitlichem Abstand an ein, z.B. von einem Unimog 104 gezogenes Spezialgerät 102 heran, das nach Art eines Futtermischers aufgebaut ist und dessen Bunker ein Fassungsvermögen von ca. 20 m³ hat. Der Rindermulch wird in einem Mischaggregat dieses Anhängergerätes homogenisiert und mit Hilfe eines am Gerät befindlichen Abwurf-Förderbandes bis zu 15 m weit auf die zu behandelnden Flächen gestreut. Wenn der Bunker des Gerätes entleert ist, wird er laufend von den ständig Material herbeitransportierenden Lastwägen 101 aufgefüllt. Die geleerten Lastwägen 101 fahren entlang der Autobahnstrecke 105 bis zur nächsten Abfahrt zurück zur Sammelstelle 100, werden dort beladen und setzen ihren Zyklus fort. Das Beladen und Entladen der Lastwägen 101 stellt dabei einen erheblichen Arbeits- und Kostenaufwand dar, da hierfür zusätzliche Ladegeräte erforderlich sind. Dabei kann das erhöhte Verkehrsaufkommen aufgrund der laufend im Einsatz befindlichen LKWs vorübergehend erhebliche Probleme verursachen.

Bei dem in Figur 4 dargestellten erfindungsgemäßen Verfahren ist eine selbstfahrende Verteilmaschine 106 im Einsatz, die den auszubringenden Rindermulch von einem Großraum-LKW 107 mit einem Fassungsvermögen von ca. 80 m³ im kontinuierlichen Betrieb beschickt wird. Dabei werden Verteilmaschinen 106 und Großraum-LKW 107 zur Materialübergabe angedockt, so dass die Maschine 106 den LKW 107 synchron mit dem Ausbringen des Rindermulches auf die zu mulchenden Flächen bewegt, so dass Maschine 106 und LKW 107 während des Entleerens des LKW 107 und des Ausbringens des von ihm geladenen Mulchesgemeinsam bewegt werden. Ist ein LKW 107 entleert , wird das im Bunker bevorratete Material von der Maschine 106 ausgebracht, wird der nächste, beladene Lkw anstelle des entleerten LKW 107 angedockt und die Mulchverteilung fortgesetzt. Bei dieser Methode wird der fortlaufende Materialtransport, sowie das Laden und Beladen eintscheidend reduziert, und damit eine erheblich einfachere und kostengünstigere, auch den Verkehr wesentlich entlastende Betriebsweise ermöglicht, mit der auch um ein Mehrfaches höhere Tagesleistungen erzielt werden können. Die Verteilmaschine nach der Erfindung gestattet auch das Erfassen von schwer zu erreichenden und weiter von der Trasse entfernt liegenden Flächen, sodass das Mulchen von Hand in diesen Bereichen entfällt und damit eine weitere Kosteneinsparung möglich ist.

## Patentansprüche

1. Verfahren zum Ausbringen von organischen oder anorganischen Materialien, z.B. Rindenmulch, Oberboden oder dergl., auf Randbereiche von Straßen und Autobahnen, wobei das Material von LKWs (L) an eine verfahrbare Verteilmaschine (1) herangebracht wird, die das Material auf die Randbereiche der Straße abgibt, **dadurch gekennzeichnet, dass** das auszubringende Material über Lastwägen (L) an die Verteilmaschine (1) herangeführt, die Materialübergabe von dem Lastwagen (L) auf die Verteilmaschine (1) im kontinuierlichen Betrieb der beiden Maschinen (LKW und Verteilmaschine) übergeben wird, und die Verteilmaschine (1) während der Übergabe kontinuierlich befüllt und das Material seitlich auf die Randbereiche, Böschungen und dergleichen über geschwindigkeitsvariable Fördervorrichtungen (16,20,21) abgegeben wird.

2. Verfahren nach Anspruch 1, **dadurch gekennzeichnet, dass** die Verteilmaschine (1) auf der Aufnahmeseite eine das Material aufnehmende Fördervorrichtung (16) aufweist, die das Material über die volle Breite der LKW-Ladefläche aufnimmt, dass die Fördervorrichtung (16) elastisch nachgiebig mit der LKW-Ladefläche während der Übergabe lose gekoppelt wird, derart, dass LKW (L) und Verteilmaschine (1) gemeinsam und mit gleicher Geschwindigkeit verfahren werden und dass die Verteilmaschine (1) während der Übergabe über ein Rollensystem (11,12) und im Maschinenrahmen (4) teleskopartig befestigte Träger (8) in Eingriff gebracht wird.

3. Verfahren nach Anspruch 1 oder 2, **dadurch gekennzeichnet, dass** das von der Fördervorrichtung (16) in die Maschine (1) eingeführte, zu verteilende Material mittels Querförderer (3) auf einen axial verlaufenden Förderstrom durch die Maschine (1) hindurch gerichtet und auf einen Schwenkverteilerarm (7) übergeführt wird, von dem das Material auf den Bereich seitlich und hinter der Maschine (1) abgegeben bzw. auf die Seitenstreifen, Böschungen und dergleichen verteilt wird.

4. Vorrichtung zum kontinuierlichen Ausbringen von organischen und/oder anorganischen Materialien zur Bodenpflege, z. B. Rindermulch, Oberboden oder dergl., an Straßen und Autobahnen, mit Hilfe einer selbstfahrenden Maschine (1) mit einem Fahrgestell (5,6), einer mit dem Fahrgestell (5,6) verbundenen Materialaufnahmevorrichtung (2), einer Materialfördervorrichtung (16,20,21), von der das Material aus der Materialaufnahme (2) auf eine Ausbringvorrichtung (22) transportiert und auf den Boden verteilt wird, **dadurch gekennzeichnet, dass**
a) die Maschine (1) am Materialaufnahmeende (2) eine elastisch nachgiebige Kopplungsvorrichtung (9,10,11,12) zum Ankoppeln bzw. losen Verbinden mit dem das Material übergebenden LKW (L) aufweist,
b) das Material von der Ladebrücke des LKW (L) auf die Aufnahmevorrichtung (2) der Maschine bei ununterbrochenem Betrieb bzw. unter Beibehaltung des Betriebes der Maschine erfolgt, und LKW (L) und Verteilmaschine (1) mit gleicher Arbeitsgeschwindigkeit bewegt werden,
c) das Material von der Aufnahmevorrichtung (2), deren Breite im wesentlichen der Lkw-Ladebrücke entspricht, mittels Querförderer (3) in der Maschine (1) auf einen Materialstrang (20) in Achsrichtung der Maschine zusammengeführt wird, und
d) der Auslegerarm (7) eine Fördervorrichtung aufweist, die dieses Strangmaterial (20) auf eine Beschleunigungsvorrichtung (21) am Ende des Auslegerarmes (7) überträgt und das Gut mit verstellbarer Geschwindigkeit und damit veränderlicher Wurfweite abgibt.

5. Vorrichtung nach Anspruch 4, **dadurch gekennzeichnet, dass** die Materialaufnahmevorrichtung (2) eine Puffer- bzw. Kupplungsvorrichtung aufweist, die Rollen (11,12) besitzt, die mit der Rückseite des Rahmens oder der Ladebrücke des LKW (L) in Eingriff kommen und LKW (L) sowie Verteilmaschine (1) kopplen, und dass die Puffer- bzw. Kupplungsvorrichtung auf einem Rahmengestell (10) angeordnet ist, das über Teleskoparme (9) mit dem Maschinenrahmen (4) federnd nachgiebig, vorzugsweise teleskopartig ausfahrbar ausgebildet ist.

6. Vorrichtung nach Anspruch 4, **dadurch gekennzeichnet, dass** die Materialaufnahmevorrichtung (2) ein Kratzboden ist, der das aufgenommene Material einem in der Verteilmaschine (1) angeordneten Querförderer (3), insbesondere einem beidseitigen Schneckenförderer (14,15) zuführt, der das Material auf ein in Längsachse der Verteilmaschine (1) angeordnetes Förderband (16) richtet, von wo der Materialstrang auf den Ausbringarm übergeben wird.

7. Vorrichtung nach einem der Ansprüche 4 - 6, **dadurch gekennzeichnet, dass** der Ausbringarm (7) am abgabeseitigen Ende ein Beschleunigerband (21) aufweist, das das Material mit einstellbarer Geschwindigkeit abwirft.

8. Vorrichtung nach einem der Ansprüche 4-7, **dadurch gekennzeichnet, dass** am Ende der Verteilmaschine (1) ein Gegengewicht (24) vorgesehen ist, das schwenkbar zur Längsachse der Maschine (1) ausgebildet ist und das selbsttätig das auf die Verteilmaschine (1) wirkende Kippmoment aufgrund der Verschwenkung des Ausbringarmes (7) kompensiert.

9. Vorrichtung nach einem der Ansprüche 4 - 8, **dadurch gekennzeichnet, dass** an der Rückseite der Verteilmaschine (1) eine nachlaufende Reinigungsanordnung (26), insbesondere eine rotierende Bürstenanordnung, die das verloren gegangene Material von der Fahrbahn kehrt, angeordnet ist.

## Claims

1. Method for discharging organic or inorganic materials, for example mulch from bark, soil covering material or the like onto edge areas of roads and motorways, whereby the material is transported by lorries (L) to a movable distribution machine (1), which discharges the material onto the edge areas of the road, **characterized in that** the material to be discharged is passed to the distribution machine (1) by lorries (L), the material transfer from the lorry (L) to the distribution machine (1) is transferred to the two machines (lorry and distribution machine) in continuous operation, and the distribution machine (1) is filled continuously during the transfer and the material is discharged laterally onto the edge areas slopes and the like by means of speed variable conveying systems (16,20,21).

2. Method according to claim 1, **characterized in that** the distribution machine (1) on its receiving side is provided with a material receiving conveying device (16), which receives material across the full width of the loading area of the lorry, that the conveying device (16) is loosely coupled resiliently in an elastic manner with the loading surface of the lorry during the transfer in such a manner that lorry (L) and distribution machine (1) are moved in common and with the same speed, and that the distribution machine (1) during the transfer operation is engaged by a roller system (11, 12) and by supports (8), which are telescopically mounted supports (8) within the machine frame (4).

3. Method according to claim 1 or 2, **characterized in that** the material to be distributed by the conveying device (16) and transferred into the machine is passed through the machine (1) by transverse conveyor means (3) to an axially extending conveying stream, and is passed onto a distribution arm (7), from which the material is delivered to the area laterally and behind the machine (1) or onto the lateral bands, slopes and the like.

4. Device for continuously discharging organic and/or inorganic materials for cultivating the soil, for example mulch from bark, soil covering material or the like on roads and motorways by means of a self propelled machine (1) with an undercarriage (5, 6), a material receiving device (2) connected to the undercarriage (5, 6), a material conveying device (16, 20, 21), from which the material is transported from the material receiving device (2) onto a discharging device (22) and is distributed over the soil, **characterized in that**
a) the machine (1) is provided with a resilient coupling means (9, 10, 11, 12) at the material receiving end for coupling or loosely connecting with the material distributing LKW (L),
b) the material from the loading bridge of the LKW (L) is passed onto the receiving device (2) of the machine by uninterrupted operation or by maintaining the operation of the machine, and LKW (L) and distribution machine (1) are driven with the same operation speed,
c) the material from the receiving section (2), the width of which substantially corresponds with the LKW loading bridge by means of a transverse conveyor (3) within the machine (1) is combined with a material strand (20) in axial direction of the machine, and
d) the cantilever arm (7) is provided with a conveying device which transfers said strand material (20) to an accelerating device (21) at the end of the cantilever arm (7), and discharges the material with variable speed and consequently with variable range.

5. Device according to claim 4, **characterized in that** material receiving device (2) is provided with a buffer or coupling device having rollers (11, 12) which engage the rear side of the frame or the loading bridge of the LKW (L), and couple LKW (L) as well distribution machine (1), and that the buffer or coupling device is arranged on a frame shelf (10), which by means of telescopic arms (9) is resiliently connected with the machine frame (4), preferably extendable in a telescopic manner.

6. Device according to claim 4, **characterized in that** the material receiving device (2) is a scraper conveyor, which feeds the received material to a transverse conveyor (3) arranged within the distribution machine (1), which transverse conveyor feeds a both-sided worm conveyor (14, 15), which passes the material onto a conveyor belt arranged in the longitudinal axis of the distribution machine (1) from where the material strand is transferred to the discharge arm.

7. Device according to one of claims 4 - 6, **characterized in that** the discharge arm (7) is provided with an accelerator band (21) at the discharge end, which band ejects the material with an adjustable speed.

8. Device according to one of claims 4 - 7, **characterized in that** at the end of the distribution machine (1) a counterweight (24) is provided, which is arranged swivably relative to the longitudinal axis of the machine (1), and which automatically compensates the tilting moment acting upon the distribution machine (1) in view of the swivelling effect of the discharge arm (7).

9. Device according to one of claims 4 - 8, **characterized in that** at the rear side of the distribution machine (1) a lagging cleaning system (26), especially a rotating brush system which brushes the lost material from the road is provided.

## Revendications

1. Procédé pour l'épandage de matières organiques ou inorganiques, par exemple un paillis d'écorces, une couche arable ou analogue, sur les bordures de routes et d'autoroutes, la matière étant amenée par camions (L) jusqu'à un distributeur mobile, qui décharge la matière sur les bordures de la route, **caractérisé en ce que** la matière à appliquer est amenée par camion (L) jusqu'au distributeur (1), le transfert de la matière du camion (L) vers le distributeur (1) étant réalisé en continu par les deux machines (camion et distributeur) et le distributeur (1) étant alimenté en continu pendant le transfert, la matière étant déchargée latéralement sur les bordures, les talus et analogues par l'intermédiaire de dispositifs d'alimentation à vitesse variable (16, 20, 21).

2. Procédé selon la revendication 1, **caractérisé en ce que** le distributeur (1) présente, côté reprise, un dispositif de transport (16) qui reprend la matière sur la totalité de la largeur de la surface de chargement du camion, que le dispositif de transport (16) est couplé de manière flexible avec la surface de chargement du camion pendant le transfert de manière à ce que le camion (L) et le distributeur (1) se déplacent en même temps et à la même vitesse et que le distributeur (1), pendant le transfert, soit mis en prise par lintermédiaire d'un système à rouleaux (11, 12) et par des supports (B) fixés de manière télescopique dans le châssis de la machine (4).

3. Procédé selon la revendication 1 ou 2, **caractérisé en ce que** la matière à distribuer introduite dans la machine (1) par le dispositif de transport (16) est dirigée à travers la machine au moyen de transporteurs transversaux (3) selon un flux qui se déplace axialement et est transférée sur un bras distributeur oscillant (7), à partir duquel la matière est déchargée sur la zone située latéralement par rapport à la machine et derrière celle-ci de manière à être distribuée sur les bandes latérales, les talus et analogues.

4. Dispositif pour l'épandage continu de matières organiques et/ou inorganiques pour l'entretien du sol, par exemple du paillis d'écorces, une couche arable ou analogue le long des routes ou des autoroutes, avec l'aide d'une machine automotrice (1), avec un châssis (5, 6), un dispositif (2) de reprise de la matière relié au châssis (5, 6), un dispositif d'alimentation de la matière (16, 20, 21) à partir duquel la matière est transportée de la reprise de la matière (2) vers un dispositif d'épandage (22) et distribuée sur le sol, **caractérisé en ce que** :
a) la machine (1) présente, à l'extrémité de la reprise de la matière (2), un dispositif de couplage élastique et flexible (7, 10, 11, 12) pour l'accouplement ou la liaison souple avec le camion (L) distribuant la matière,
b) le transfert de la matière du pont de chargement du camion (L) sur le dispositif de reprise (2) de la machine a lieu de manière ininterrompue ou en conservant la machine en fonctionnement, le camion (1) ainsi que le distributeur (1) étant déplacé à la même vitesse de travail,
c) la matière est rassemblée par le dispositif de reprise (2), dont la largeur correspond essentiellement à celle du pont de chargement du camion, au moyen de distributeurs transversaux (3) de la machine (1), en un andain de matière (20) dans le sens axial de la machine, et
d) le bras (7) présente un dispositif de transport qui transfère cet andain de matières (20) sur un dispositif d'accélération (21) situé à l'extrémité du bras (7) et qui distribue le produit avec une vitesse réglable et donc une largeur de jet variable.

5. Dispositif selon la revendication 4, **caractérisé en ce que** le dispositif de reprise de la matière (2) présente un dispositif tampon ou d'accouplement, qui possède des rouleaux (11, 12) qui sont amenés en prise avec l'arrière du châssis ou du pont de chargement du camion (L) et qui accouplent le camion (L) ainsi que le distributeur (1), et que le dispositif tampon ou d'accouplement est disposé sur un châssis (10) qui est agencé de manière flexible avec le châssis et la machine par lintermédiaire de bras télescopiques (9), préférentiellement est agencé de manière télescopique.

6. Dispositif selon la revendication 4, **caractérisé en ce que** le dispositif de reprise de la matière (1) est un fond racleur qui amène la matière reprise jusqu'à un transporteur transversal (3) disposé dans le distributeur (1), en particulier un transporteur à vis sans fin de part et d'autre qui amène la matière sur un tapis transporteur (16) disposé dans l'axe longitudinal du distributeur (1), tapis à partir duquel l'andain des matières est transféré sur le bras d'épandage.

7. Dispositif selon l'une des revendications 4 à 6, **caractérisé en ce que** le bras d'épandage (7), à l'extrémité côté distribution, présente un tapis accélérateur (21), qui éjecte les matières avec une vitesse réglable.

8. Dispositif selon l'une des revendications 4 à 7, **caractérisé en ce que**, à l'extrémité du distributeur (1), un contrepoids (24) est prévu qui est agencé de manière amovible par rapport à l'axe longitudinal de la machine (1) et qui compense automatiquement le moment de basculement agissant sur le distributeur (1) en raison de l'oriéntation du bras d'épandage (7).

9. Dispositif selon une des revendications 4 à 8, **caractérisé en ce que**, à l'arrière du distributeur (1), un dispositif de nettoyage suiveur (26), en particulier un agencement à brosse rotative, qui balaie les matières perdues de la bande de circulation, est disposé.
